Europäisches Patentamt

European Patent Office

Office européen des brevets

(11) Veröffentlichungsnummer: **0 131 650**
**B1**

(12) **EUROPÄISCHE PATENTSCHRIFT**

(45) Veröffentlichungstag der Patentschrift: **04.04.90**

(21) Anmeldenummer: **83110806.3**

(22) Anmeldetag: **28.10.83**

(51) Int. Cl.⁵: **F 16 J 15/32**

(54) **Dichtung.**

(30) Priorität: **13.07.83 DE 3325201**

(43) Veröffentlichungstag der Anmeldung:
**23.01.85 Patentblatt 85/04**

(45) Bekanntmachung des Hinweises auf die
Patenterteilung:
**04.04.90 Patentblatt 90/14**

(84) Benannte Vertragsstaaten:
**AT BE CH DE FR GB IT LI LU NL SE**

(56) Entgegenhaltungen:
**BE-A- 550 534**
**DE-A-2 719 410**
**GB-A-2 082 692**
**US-A-4 106 781**

(73) Patentinhaber: **Firma Carl Freudenberg**
**Höhnerweg 2-4**
**D-6940 Weinheim/Bergstrasse (DE)**

(72) Erfinder: **Hölzer, Helmut**
**Hegelstrasse 15**
**D-6940 Weinheim (DE)**

Courier Press, Leamington Spa, England.

## Beschreibung

Die Erfindung betrifft eine Dichtung, umfassend einen flüssigkeitsdicht und unverdrehbar, jedoch axial verschiebbar auf der Welle gelagerten Innenring aus elastischem Werkstoff, der ein U-förmig nach außen geöffnetes Profil mit zwei nach außen vorspringenden Ringvorsprüngen aufweist sowie einen Außenring aus Blech mit einem in den Zwischenraum der Ringvorsprünge eingreifenden Flansch, wobei der Flansch mit der Dichtungsachse einen Neigungswinkel einschließt, so daß sich unter Bildung einer Dichtfläche eine axiale Anpressung und Deformierung eines der beiden Ringvorsprünge am Flansch ergibt.

Eine solche Dichtung ist bekannt aus der US-A-4 106 781. Dabei ist nur im Bereich eines der beiden Ringvorsprünge eine Dichtungsfläche vorgesehen und ein Durchlaß für abzudichtendes Medium im Bereich des anderen Ringvorsprunges. Abzudichtendes Medium vermag dadurch während der bestimmungsgemäßen Verwendung einer solchen Dichtung ständig in den Zwischenraum zwischen dem Außen- und dem Innenring nachzuströmen. Die sich ergebende Abdichtwirkung ist wenig befriedigend.

In der GB-A-2 082 692 wird eine Dichtung beschrieben, bei der an dem Innenring ein radial und ein axial vorstehender Ringvorsprung vorgesehen sind, die einen schräg nach innen vorspringenden Flansch des Außenringes beiderseits umgreifen und dichtend berühren. Die Anpressung des axial vorstehenden.

Ringvorsprunges an den Flansch des Außenringes erfährt dabei mit ansteigender Drehzahl eine zunehmende Verminderung, was gleichbedeutend ist mit einer zunehmenden Verminderung des Abdichtungsergebnisses. Auch ist die Dichtung relativ aufwendig in der Herstellung und hat sich wahrscheinlich aus diesem Grunde noch nicht in einem nennenswerten Umfange durchsetzen können.

Die DE-A-27 19 410 nimmt bezug auf eine Dichtung, bei der ein in radialer Richtung nach innen vorspringender Flansch des Außenringes von zwei nach außen vorstehenden Ringvorsprüngen des Innenringes beiderseits umgriffen ist, welche ihn dichtend berühren. Das erzielte Abdichtungsergebnis ist wenig befriedigend. Auch besteht der Innenring aus einem kompliziert gestalteten Gummiformteil und läßt sich dementsprechend schwierig fertigen.

Der Erfindung liegt die Aufgabe zugrunde, eine Dichtung der eingangs genannten Art derart weiterzuentwickeln, daß bei verminderten Herstellkosten ein gutes Abdichtungsergebnis unter Vermeidung von Justierarbeiten vor Inbetriebnahme auch dann gewährleistet ist, wenn Radialverlagerungen, Axialverlagerungen und/oder Winkelverlagerungen der abgedichtenden Welle zu erwarten sind.

Diese Aufgabe wird erfindungsgemäß bei einer Dichtung der eingangs genannten Art durch die kennzeichnenden Merkmale von Anspruch 1 gelöst. Auf vorteilhafte Ausgestaltungen nehmen die Unteransprüche bezug.

Bei der erfindungsgemäßen Dichtung ist es vorgesehen, daß beide Ringvorsprünge unter axialer Anpressung und elastischer Verformung am Flansch unter Bildung jeweils einer Dichtfläche anliegen, so daß der Innenring die erforderliche axiale Führung durch die Festlegung des Außenringes in der Gehäusebohrung erhält, wobei der den Flansch am Fuß des Profils berührende Ringvorsprung über die Berührungsfläche hinaus verlängert ist und an der dem Flansch zugewandten axialen Begrenzungsfläche eines zweiten Flansches anliegt. Der von dem Flansch und den Ringvorsprüngen umschlossene Hohlraum ist nicht durchströmbar, was zur Folge hat, daß sich mit zunehmender Erhöhung der Drehzahl eine zunehmende, gegenseitige Verpressung zwischen dem Flansch und den Ringvorsprüngen im Bereich der gegenseitigen Berührungsflächen ergibt. Die resultierende Dichtwirkung ist dementsprechend von ganz besonderer Güte. Sie wird weiter verbessert durch das Vorhandensein einer dritten Dichtungsfläche, welche sich im Bereich der gegenseitigen Berührungszone zwischen der Verlängerung des einen Ringvorsprunges und der dem Flansch zugewandten, axialen Begrenzungsfläche eines zweiten Flansches befindet. Diese Dichtungsfläche ist den anderen beiden Dichtungsflächen vorgeschaltet und ermöglicht die Abdichtung höherer Drücke, insbesondere dann, wenn der entsprechend verlängerte Ringvorsprung unter einer elastischen Vorspannung an dem zweiten Flansch anliegt. Der Innenring kann aus irgendeinem elastisch verformbaren Werkstoff bestehen, der flüssigkeitsundurchlässig ist. Bevorzugt kommen Gummi- und PTFE-Qualitäten zur Anwendung, wobei die Erzeugung des U-förmig nach außen geöffneten Profils nicht unbedingt von der Verwendung entsprechend gestalteter Formwerkzeuge abhängig ist sondern gegebenenfalls auch auf einer Drehmaschine unter Zuhilfenahme schneidender und/oder prägender Werkzeuge erfolgen kann. Das Ausgangsmaterial bilden in diesem Falle stranggepreßte Halbzeuge, beispielsweise ein Schlauch- oder Stangenmaterial aus Gummi oder PTFE. Diese können im Bereich des sich in axialer Richtung erstreckenden Abschnittes des fertigen Innenringes mit einer Verstärkungseinlage versehen sein, um die definierte Festlegung auf der Welle zu erleichtern. Entsprechende Verstärkungseinlagen können aus einem Gewebe oder einem Fadengelege bestehen.

Es ist nicht unbedingt notwendig, daß der Querschnitt der Nut des Innenringes vor seiner Montage radial innerhalb der äußeren Begrenzungsflächen eine axiale Verengung aufweist. Sogar eine axiale Erweiterung in Richtung der äußeren Begrenzungsflächen ist möglich und vereinfacht die Herstellung des notwendigen Querschnittes insbesondere bei der Anwendung spanabhebender Bearbeitungsverfahren wesentlich. Die notwendige Anpressung an die axialen Begrenzungsflächen des Flansches ist dennoch gewährleistet und beruht insbesondere·auf dem Neigungswinkel, den der Flansch mit der Dichtungsachse einschließt. Die axial außenliegenden Begrenzungsflächen der Ringvorsprünge des Innenringes sind der Rotationsachse bevorzugt unter einem Winkel von 90 Grad zugeordnet und ebenflächig ausgebildet. Abweichungen sind möglich. Sie haben jedoch in aller Regel eine weniger optimale Werkstoffausnutzung zur Folge und damit eine Vergrößerung der Herstellkosten.

Der die Ringvorsprünge verbindende Hohlzylinder muß so bemessen sein, daß ein Kippen des montierten Innenringes auf der Welle vermieden wird. Zugleich muß die Festlegung eine sichere Übertragung der Drehbewegung gewährleisten, eine gute statische Abdichtung sowie die Möglichkeit einer axialen Verschiebung beim Auftreten von Wellenverlagerungen. Die Gewährleistung dieser Bedingungen bereitet dem erfahrenen Dichtungsfachmann keine besonderen Schwierigkeiten.

Zwischen dem Innendurchmesser des Außenringes und dem Außendurchmesser des Hohlzylinders ist ein radialer Abstand vorhanden, durch den gewährleistet wird, daß radiale Verlagerungen der abgedichteten Welle nicht zu Funktionsstörungen führen können. Das Profil des Flansches ist am radial inneren Ende abgerundet, um eine mechanische Beschädigung des Innenringes in kritischen Betriebssituationen zu vermeiden.

Der Neigungswinkel zwischen dem Flansch und der Rotationsachse beträgt 30 bis 60°, vorzugsweise 35 bis 45°. Er gewährleistet einen ausreichend großen Querschnitt des von den Dichtflächen begrenzten Freiraumes, was wichtig ist in bezug auf die Erzielung eines guten Abdichtungsergebnisses bei Überflutung der Dichtung mit abgedichtetem Medium.

Der den Flansch am Fuß des Profils berührende Ringvorsprung kann über die Berührungsfläche mit dem zweiten Flansch hinaus noch weiter verlängert sein und an der Innenseite eines den Flansch mit dem zweiten Flansch verbindenden Hohlzylinders anliegen. In diesem Falle resultiert eine vierte Dichtfläche, die die Wirkung der übrigen Dichtflächen durch ein weiteres Glied ergänzt. Die abdichtbaren Drücke des abgedichtenden Mediums können hierdurch um eine weitere Stufe erhöht werden. Der Ringvorsprung liegt bei einer entsprechenden Ausführung bevorzugt mit einer Wölbung an der Innenfläche des Hohlzylinders an.

Darüberhinaus ist es nach einer weiteren vorteilhaften Ausgestalung vorgesehen, daß der den Flansch am Fuß des Profils berührende Ringvorsprung über die Berührungsfläche mit dem zweiten Flansch hinaus noch weiter verlängert ist und an der Innenseite eines den Flansch mit dem zweiten Flansch verbindenden Hohlzylinders anliegt. In diesem Falle resultiert eine vierte Dichtfläche, die die Wirkungsreihe der übrigen Dichtflächen durch ein weiteres Glied ergänzt. Die abdichtbaren Drücke des abgedichteten Mediums können hierdurch um eine weitere Stufe erhöht werden. Der Ringvorsprung liegt bei einer entsprechenden Ausführung bevorzugt mit einer Wölbung an der Innenfläche des Hohlzylinders an.

Die einander in den Bereichen der dynamischen Dichtungszonen berührenden Flächen sind im Regelfalle eben ausgebildet und lassen sich dadurch besonders einfach herstellen. Die Anbringung von hydrodynamisch wirksamen Rückförderlmenten für Leckflüssigkeit ist selbstverständlich möglich und kann auf der Seite der Ringvorsprünge ebenso angewendet werden wie auf der Seite des Flansches, des zweiten Flansches oder der Innenseite des Hohlzylinders des Außenringes. Neben einer Begünstigung der Abdichtwirkung läßt sich hierdurch der Ablagerung von Ölkohle im Bereich der dynamischen Dichtungszonen wirksam begegnen. Entsprechende Rückförderelemente können auch durch radiale Vorsprünge gebildet werden, die gleichmäßig auf dem Außenumfang der Ringvorsprünge verteilt sind.

Der Gegenstand der vorliegenden Erfindung wird nachfolgend anhand der in der Anlage beigefügten Zeichnungen weiter erläutert. Es zeigen:

Figur 1 Eine Dichtung, bei der sich der Innenring und der Außenring einander mit drei hintereinanderliegenden Dichtflächen.

Figur 2 Eine Ausführung, bei der sich der Innenring und der Außenring mit vier aufeinanderfolgenden Dichtflächen berühren.

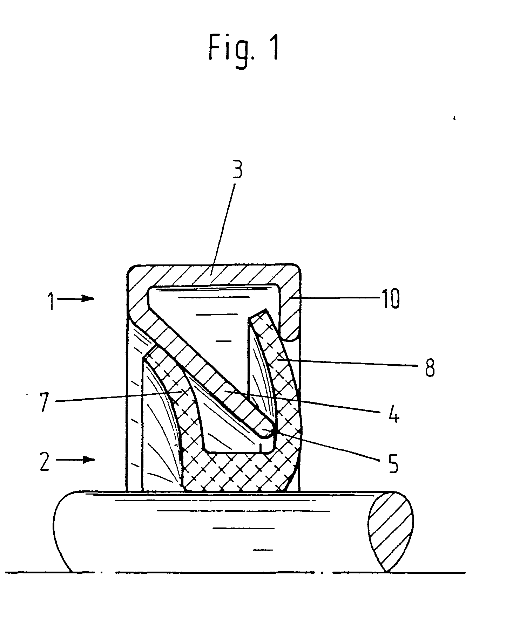

Die in Figur 1 gezeigte Ausführung besteht aus einem Außenring 1 aus Stahlblech und aus einem Innenring 2 aus Gummi. Der Außenring weist einen hohlzylindrisch ausgebildeten Einspannteil 3 auf, der auf der linken Seite in radialer Richtung nach innen abgekröpft ist und unter Ausbildung eines kegeligen Flansches in Richtung des abgedichteten Mediums vorgezogen ist. Der Neigungswinkel zwischen der Erstreckung des Flansches 4 und der Dichtungsachse beträgt 45 Grad. Der Fuß 5 des Profils des Flansches ist abgerundet, um eine mechanische Beschädigung des Innenringes 2 zu vermeiden.

Der Innenring 2 besteht aus Gummi einer Härte Shore A 75. Er ist elastisch auf der abgedichteten Welle festgelegt und folgt unter Gewährleistung einer axialen Verschiebbarkeit deren Drehbewegung. Er wird in der dargestellten Form gemeinsam mit dem Außenring 1 auf die abzudichtende Welle aufgeschoben und er erhält die erforderliche, axiale Führung durch die Festlegung des Außenringes 1 in der aufnehmenden Gehäusebohrung.

Der Innenring 2 wird in axialer Richtung durch die beiden Ringvorsprünge 7, 8 begrenzt, die in einer sich senkrecht zur Rotationsachse erstreckenden Form hergestellt sind und die durch das Einfügen des Außenringes die dargestellte seitliche Abbiegung erfahren. Die Ringvorsprünge liegen dadurch unter einer axial nach innen gerichteten Vorspannung an dem Flansch 4 des Außenringes an. Zusätzlich ist der dem abzudichtenden Medium zugewandte Ringvorsprung 8 des Innenringes in radialer Richtung nach außen vergrößert und liegt unter einer elastischen Vorspannung an der Innenseite eines zweiten, sich nach innen erstreckenden Flansches 10 des Außenringes 1 an. Hierdurch wird eine dritte Dichtfläche gebildet, die den beiden anderen Dichtflächen vorgeschaltet ist.

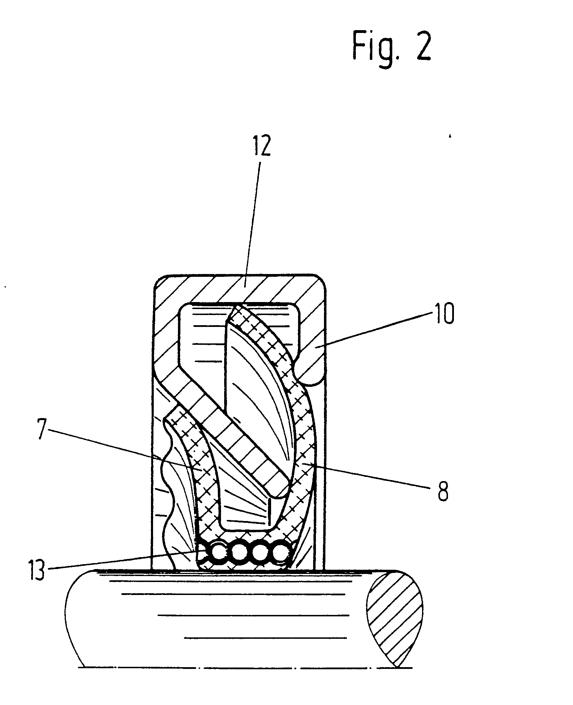

Die Ausführung nach Figur 2 ist derjenigen nach Figur 1 ähnlich, wobei jedoch der dem abgedichteten Medium zugewandte Ringvorsprung 8 in radialer Richtung nach außen nochmals verbreitert ist und mit einer umlaufenden Kontaktfläche an der inneren Begrenzungsfläche des Hohlzylinders 12 anliegt. Hierdurch wird eine vierte Dichtfläche gebildet, die die allgemeine Wirksamkeit weiter erhöht. Der Innenring erfährt zusätzlich eine Stabilisierung seiner Zuordnung zu dem Außenring, was sich vorteilhaft auswirkt in bezug auf die Gewährleistung einer guten Funktionssicherheit, wenn die Montage in wenig sachgerechter Form erfolgt. Er ist in dem sich in axialer Richtung erstreckenden Abschnitt durch eine Einlage aus einem Drahtgewebe verstärkt, um die Festlegung auf der Welle noch besser zu definieren und Verformungen in diesem Bereich zu vermeiden. Als Verstärkungseinlage läßt sich auch ein Ring mit winkelförmigem Profil aus einem Hartwerkstoff verwenden. Der sich in radialer Richtung erstreckende Schenkel kann in diesem Falle den Fuß 5 des Flansches 4 übergreifen um in diesem Bereich eine Verformung des Ringvorsprunges 8 zu verhindern.

## Patentansprüche

1. Dichtung, umfassend einen flüssigkeitsdicht und unverdrehbar, jedoch axial verschiebbar auf der Welle gelagerten Innenring (2) aus elastischem Werkstoff, der ein U-förmiges nach außen geöffnetes Profil mit zwei nach außen vorspringenden Ringvorsprüngen (7, 8) aufweist sowie einen Außenring (1) aus Blech mit einem in den Zwischenraum der Ringvorsprünge (7, 8) eingreifenden Flansch (4), wobei der Flansch (4) mit der Dichtungsachse einen Neigungswinkel einschließt, so daß sich unter Bildung einer Dichtfläche eine axiale Anpressung und Deformierung eines der beiden Ringvorsprünge (7,8) am Flansch (4) ergibt, dadurch gekennzeichnet, daß der Neigungswinkel des Flansches (4) so bemessen ist, daß beide Ringvorsprünge (7, 8) unter axialer Anpressung und elastischer Verformung am Flansch (4) unter Bildung jeweils einer Dichtfläche anliegen, so daß der Innenring (2) die erforderliche, axiale Führung durch Festlegung des Außenringes (1) in der Gehäusebohrung erhält und daß der den Flansch (4) am Fuß (5) des Profils berührende Ringvorsprung (8) über die Berührungsfläche hinaus verlängert ist und an der dem Flansch (4) zugewandten, axialen Begrenzungsfläche eines zweiten Flansches (10) anliegt.

2. Dichtung nach Anspruch 1, dadurch gekennzeichnet, daß der Ringvorsprung (8) unter einer elastischen Vorspannung an dem zweiten Flansch (10) anliegt.

3. Dichtung nach Anspruch 2, dadurch gekennzeichnet, daß der den Flansch am Fuß (5) berührende Ringvorsprung (8) über die Berührungsfläche mit dem zweiten Flansch (10) hinaus verlängert ist und an der Innenseite eines den Flansch (4) und den zweiten Flansch (10) verbindenden Hohlzylinders (12) anliegt.

4. Dichtung nach Anspruch 3, dadurch gekennzeichnet, daß der der Ringvorsprung (8) im Bereich der Berührungsfläche mit dem zweiten Flansch (10) und/oder mit dem Hohlzylinder (12) gegen den Flansch (4) gewölbt ist.

5. Dichtung nach Anspruch 1 bis 4, dadurch gekennzeichnet, daß der Flansch (4), der zweite Flansch (10), der Hohlzylinder (12) und/oder die diese berührenden Flächen wenigstens eines Ringvorsprunges (7, 8) mit hydrodynamischen Rückförderelementen für Leckflüssigkeit versehen sind.

6. Dichtung nach Anspruch 5, dadurch gekennzeichnet, daß die radial äußeren Begrenzungsflächen wenigstens eines Ringvorsprunges (7, 8) mit gleichmäßig auf dem Umfang verteilten Vorsprüngen versehen sind.

## Revendications

1. Joint d'étanchéité constitué d'une bague intérieure (2) en matériau élastique montée sur l'arbre de manière étanche aux liquides et sans possibilité de rotation tout en pouvant néanmoins se déplacer axialement, cette bague présentant un profil en "U" ouvert vers l'extérieur avec deux saillies annulaires (7, 8) tournées vers l'extérieur, ainsi qu'une bague intérieure (1) en tôle avec une bride (4) pénétrant dans l'interstice entre les saillies annulaires (7,8) tandis que la bride (4) forme avec l'axe du joint un angle d'inclinaison de façon à obtenir une compression axiale et une déformation d'une des deux saillies annulaires (7, 8) contre la bride (4), avec formation d'une surface d'étanchéité, caractérisé en ce que l'angle d'inclinaison de la bride (4) est choisi de façon à ce que les deux saillies annulaires (7, 8) prennent appui contre la bride (4) en formant chaque fois une surface d'étanchéité avec compression axiale et déformation élastique, si bien que la bague intérieure (2) subit le guidage axial nécessaire par la fixation de la bague extérieure (1) dans l'alésage du logement et que la saillie annulaire (8) venant en contact avec la bride (4) à la base du profil est prolongée au-delà de la surface d'étanchéité et prend appui contre la surface délimitant axialement une deuxième bride (10) et tournée vers la bride (4).

2. Joint d'étanchéité selon la revendication 1, caractérisé en ce que la saillie annulaire (8) prend appui contre la deuxième bride (10) avec précontrainte élastique.

3. Joint d'étanchéité selon la revendication 2, caractérisé en ce que la saillie annulaire (8) venant au contact de la bride à la base (5) est prolongée au-delà de la surface de contact avec la deuxième bride (10) et prend appui sur la face intérieure d'un cylindre creux (12) reliant la bride (4) et la deuxième bride (10).

4. Joint d'étanchéité selon la revendication 3, caractérisé en ce que la saillie annulaire (8) est incurvée dans la zone de la surface de contact avec la deuxième bride (10) et/ou avec le cylindre creux (12) contre la bride (4).

5. Joint d'étanchéité selon les revendications 1 à 4, caractérisé en ce que la bride (4), la deuxième bride (10), le cylindre creux (12) et/ou les surfaces venant en contact avec ceux-ci présentent au moins une saillie annulaire (7, 8) avec des éléments de renvoi à action hydrodynamique pour refouler le liquide de fuite.

6. Joint d'étanchéité selon la revendication 5, caractérisé en ce que les surfaces délimitant radialement vers l'extérieur au moins une saillie annulaire (7, 8) sont pourvues de saillies réparties uniformément sur la périphérie.

**Claims**

1. A seal comprising an inner ring (2) of elastic material, which is mounted fluid-tightly and non-rotatably, but axially displaceably on the shaft and which has a U-shaped profile opened to the outside with two annular projections (7, 8) projecting to the outside, as well as an outer ring (1) of sheet metal with a flange (4) engaging in the interspace of the annular projections (7, 8), the flange (4) enclosing an angle of inclination with the seal axis such that an axial contact pressure and deformation of one of the two annular projections (7, 8) on the flange (4) occurs with formation of a sealing surface, characterised in that the angle of inclination of the flange (4) is dimensioned such that both annular projections (7, 8) lie against the flange (4) under axial contact pressure and resilient deformation with formation of a sealing surface in each case, such that the inner ring (2) receives the required axial guidance by fixing the outer ring (1) in the housing bore, and in that the annular projection (8) touching the flange (4) at the foot (5) of the profile is extended beyond the contact surface and lies against the axial limiting surface, facing the flange (4), of a second flange (10).

2. A seal according to claim 1, characterised in that the annular projection (8) lies against the second flange (10) under a resilient prestress.

3. A seal according to claim 2, characterised in that the annular projection (8) touching the flange at the foot (5) is extended beyond the contact surface with the second flange (10) and lies against the inside of a hollow cylinder (12) connecting the flange (4) and the second flange (10).

4. A seal according to claim 3, characterised in that, in the region of the contact surface, the annular projection (8) is curved with the second flange (10) and/or with the hollow cylinder (12) against the flange (4).

5. A seal according to any of claims 1 to 4, characterised in that the flange (4), the second flange (10), the hollow cylinder (12) and/or the surfaces of at least one annular projection (7, 8) touching the latter are provided with hydrodynamic return elements for leaking fluid.

6. A seal according to claim 5, characterised in that the radially external limiting surfaces of at least one annular projection (7, 8) are provided with projections distributed evenly on the circumference.

# Fig. 1

## Fig. 2